# EUROPÄISCHE PATENTSCHRIFT

(11) **EP 2 397 732 B1**
(45) Veröffentlichungstag und Bekanntmachung des Hinweises auf die Patenterteilung: **20.02.2019**
(21) Anmeldenummer: 11162821.0
(22) Anmeldetag: 18.04.2011
(51) Int. Cl.: F16K 1/44, F16K 31/122

(54) **Vorrichtung zum Antreiben eines Doppelsitzventils**
Device for operating a double seat valve
Dispositif d'entraînement d'une soupape à double siège

(30) Priorität: 21.06.2010 DE 102010030299
(43) Veröffentlichungstag der Anmeldung: 21.12.2011
(73) Patentinhaber: Krones AG, 93073 Neutraubling (DE)
(72) Erfinder: Sauer, Martin, 86687, Altisheim (DE); Wiedenmann, Willi, 73469, Riesbürg (DE)
(74) Vertreter: Grünecker Patent- und Rechtsanwälte PartG mbB

(56) Entgegenhaltungen:
- WO-A1-2004/015314
- WO-A1-2005/093298
- WO-A1-2009/089853
- DE-A1- 4 236 464
- DE-B3- 10 237 236
- DE-C1- 19 548 860
- DE-U1-202006 012 959

## Beschreibung

Die Erfindung betrifft eine Antriebsvorrichtung gemäß Oberbegriff des Patentanspruchs 1.

Solche Doppelsitzventile werden nicht nur in der Lebensmittelindustrie verwendet, sondern beispielsweise auch für kosmetische oder Arznei-Produkte, um Strömungswege zu verbinden, oder zuverlässig voneinander zu separieren, wobei z.B. bei einem Produktwechsel oder nach bestimmten Einsatzzeiten externe und/oder interne Reinigungstakte durchgeführt werden müssen. Dabei sind unter anderem wichtige Anforderungen an das Doppelsitzventil dahingehend zu erfüllen, dass im Schließzustand des Doppelsitzventils und bei Reinigungstakten keine Verbindung zwischen den Strömungswegen entstehen, im Schließzustand gegebenenfalls auftretende Leckage keinesfalls von einem Strömungsweg in den anderen übertreten, bei Reinigungstakten kein unkontrollierter Verlust der Separation der Strömungswege entstehen darf und bei den Reinigungstakten unter Verwendung eines Reinigungsmediums sämtliche zuvor beispielsweise mit dem Lebensmittel, einer Leckage oder dem Reinigungsmedium in Kontakt kommende Komponenten des Doppelsitzventils einwandfrei reinigbar sind, gegebenenfalls unter Erzielen sogar aseptischer Verhältnisse.

Üblich sind zumindest zwei verschiedene Doppelsitzventiltypen. Bei dem einen Typ erfüllt der erste Ventilteller eine Sitzventilfunktion mit axialer oder axialer und radialer Abdichtung im oder am Sitz, während der andere Ventilteller eine Schieberventilfunktion mit nur radialer Abdichtung im Sitz erbringt. Bei dem anderen Typ, der beispielsweise bei Aseptik zweckmäßig ist, erbringt hingegen der zweite Ventilteller ebenfalls eine Sitzventilfunktion mit axialer oder axialer und radialer Abdichtung. Im Schließzustand des Doppelventils begrenzen die beiden Ventilteller miteinander im Sitz einen Leckageraum, der mit der Außenumgebung verbunden sein kann, eventuelle Leckagen aufnimmt und so verhindert, dass Leckage von einem Strömungsweg in den anderen gelangt. Beim Öffnungstakt nimmt der seine Öffnungsbewegung zunächst aufnehmende zweite Ventilteller den ersten Ventilteller mit, wobei der Leckageraum mit einer Mitteldichtung nach außen abgedichtet ist, sobald sich beide Ventilteller vom Sitz entfernen und die Strömungswege verbunden werden. Der Schließtakt des Doppelventils wird üblicherweise durch Federanordnungen ausgeführt, die zumindest auf zwei der drei Kolben einwirken. Für den Doppelsitzventiltyp, bei dem der zweite Ventilteller die Schieberventilfunktion erbringt, fungiert der erste Kolben als Hauptkolben für den Öffnungstakt, während die zweiten und dritten Kolben als Lüftkolben für die Reinigungstakte beider Ventilteller vorgesehen sind. Bei dem Doppelsitzventiltyp, dessen zweiter Ventilteller ebenfalls eine Sitzventilfunktion erbringt, fungiert der erste Kolben als Hauptkolben für den Öffnungstakt und gegebenenfalls als Lüftkolben für einen Reinigungstakt eines Ventiltellers, während der dritte Kolben als Lüftkolben für den Reinigungstakt des anderen Ventiltellers dient, und der zweite Kolben dabei den nicht einem Reinigungstakt unterworfenen Ventilteller in der Schließlage sichert und den Hub beim Reinigungstakt des einen Ventiltellers begrenzt. Wichtige Anforderungen an die Antriebsvorrichtung bestehen dahingehend, dass kurze Schaltzeiten, insbesondere bei den Reinigungstakten erzielt werden, dass die Antriebsvorrichtung so kompakt wie möglich gebaut wird, da in der Umgebung solcher Doppelsitzventile meist beengter Einbauraum vorliegt, und dass exakt definierte Lüftstellungen jedes Ventiltellers beim Reinigungstakt und ein möglichst geringer Druckmediumverbrauch bei den Takten erzielbar sind. Im Regelfall wird als Druckmedium zum Steuern der Antriebsvorrichtung Druckluft verwendet.

Bei der aus WO 2004/015314 A1 bekannten Antriebsvorrichtung sind zwei jeweils aus Halbschalen vorgefertigte Antriebsvorrichtungsgehäuse hintereinander geschaltet und über Endflansche und eine Klammereinrichtung miteinander verbunden. In dem den Ventiltellern abgewandten Antriebsvorrichtungsgehäuse ist nur der erste Kolben mit der Schließfederanordnung enthalten, der in der ersten Kammer durch das hohle Koppelelement druckbeaufschlagbar ist. Im zweiten, den Ventiltellern näher liegenden Antriebsvorrichtungsgehäuse sind der zweite und der dritte Kolben untergebracht, die über von außen quer in zweite, dritte und vierte Kammern mündende Anschlüsse mit Druckmittel beaufschlagbar sind. Eine Passivfederanordnung ist wirkungsmäßig zwischen den zweiten und dritten Kolben zentral in einer unterseitigen Verlängerung untergebracht. Beim Öffnen des Doppelsitzventils müssen die ersten und zweiten Kolben über den vollen Hub druckbeaufschlagt werden, wobei der Reibungswiderstand des Dichtbereichs des zweiten Kolbens über dessen vollen Hub mit überwunden werden muss. Das Antriebsvorrichtungsgehäuse baut in Axialrichtung, auch wegen der axial voneinander getrennten Schließfederanordnung und der Passivfederanordnung, lang. Der Druckmittelbedarf zum Öffnen ist hoch.

Bei der aus DE 10237236 B3 bekannten Antriebsvorrichtung besteht das Antriebsvorrichtungsgehäuse aus zwei getrennt vorgefertigten und axial hintereinander gesetzten Gehäusen mit dem ersten Kolben und der Schließfederanordnung im oberen Gehäuse und den zweiten und dritten Kolben und der Passivfederanordnung im unteren Gehäuse. Zum Öffnen des Doppelsitzventils müssen die ersten und zweiten Kolben über den vollen Hubweg druckbeaufschlagt werden, wobei auch der Reibungswiderstand des Dichtbereichs des zweiten Kolbens zu überwinden ist. Die Antriebsvorrichtung baut axial lang.

Bei der aus DE 19548860 C1 bekannten Antriebsvorrichtung sind in einem einzigen Antriebsvorrichtungsgehäuse alle drei Kolben untergebracht, wobei der zweite Kolben in einem Führungsbereich zwischen oberen und unteren Anschlägen im ersten Kolben untergebracht ist. Dem zweiten Kolben ist die Aufgabe zugewiesen, den ersten Ventilteller in den Sitz zu pressen, wenn der zweite Ventilteller abgehoben wird.

Bei der aus DE 4236464 A1 bekannten Antriebsvorrichtung sind in einem Antriebsvorrichtungsgehäuse vier Kolben untergebracht, wobei der zweite Kolben im ersten Kolben abgedichtet verschiebbar ist. Die Schließfederanordnung und die Passivfederanordnung sind in Axialrichtung hintereinander gesetzt.

Weiterer Stand der Technik ist zu finden in DE 202006012959 U1 und WO 2009/089853 A1.

Bei der aus DE 42 43 111 A bekannten Antriebsvorrichtung für ein aseptisches Doppelsitzventil ist im Antriebsvorrichtungsgehäuse der zweite Kolben im Inneren des ersten Kolbens abgedichtet verschieblich geführt, so dass die erste Kammer zwischen den ersten und zweiten Kolben begrenzt wird. Der Druckübertragungsweg in die erste Kammer erstreckt sich durch den die Hauptfederanordnung enthaltenden Raum im Antriebsvorrichtungsgehäuse. Daraus resultiert nicht nur eine unerwünscht lange Schaltzeit beim Reinigungstakt, da sich der Druck in dem großen Raum verzögert aufbaut, sondern auch hoher Druckluftverbrauch gepaart mit einer unerwünscht zeitabhängig definierten Lüftstellung des Ventiltellers.

Aus WO 2005/093298 A und WO 2005/093299 A bekannte Antriebsvorrichtungen sind durch Umsetzen mehrerer innenliegender Komponenten der Antriebsvorrichtung wahlweise für beide eingangs genannten Typen von Doppelsitzventilen verwendbar. Der zweite Kolben ist innen im ersten Kolben abgedichtet verschiebbar und begrenzt mit dem ersten Kolben die erste Kammer. Bei einer Ausführungsform erstreckt sich der Druckübertragungsweg in die erste Kammer zentral durch das Antriebsvorrichtungsgehäuse und über mehrere Strömungsumlenkungen. Bei einer anderen Ausführungsform erstreckt sich der Druckübertragungsweg in die erste Kammer seitlich in das Antriebsvorrichtungsgehäuse, jedoch nicht direkt in die erste Kammer, sondern über mehrfache Umlenkungen und durch den ersten Kolben.

Aus DE 10 237 236 A bekannte Antriebsvorrichtungen für jeweils nur einen Doppelsitzventiltyp weisen zwei in Achsrichtung der Gesamtanordnung aus Antriebsvorrichtung und Doppelsitzventil hintereinander gesetzte, abgedichtet miteinander verbundene Antriebsvorrichtungsgehäuse auf, von denen eines die Hauptfederanordnung und den ersten Kolben und das andere eine weitere Federanordnung und die zweiten und dritten Kolben und drei Druckübertragungswege enthält. Der Druckübertragungsweg zur ersten Kammer erstreckt sich zentral axial durch das dem Doppelsitzventil abgewandte eine Antriebsvorrichtungsgehäuse. Die Antriebsvorrichtung ist baulich aufwändig und beansprucht in Achsrichtung eine unzweckmäßig große Bauhöhe.

Der Erfindung liegt die Aufgabe zugrunde, eine Antriebsvorrichtung der eingangs genannten Art zu schaffen, die baulich einfach, in Axialrichtung kompakt, funktionssicher und schnell schaltend ist, wobei die Antriebsvorrichtung gegebenenfalls universell für verschiedene Doppelsitzventiltypen brauchbar sein soll.

Die gestellte Aufgabe wird mit den Merkmalen des Patentanspruchs 1 gelöst.

Die axiale Dicht- und Führungslänge für den zweiten Kolben im Führungsring ist kürzer als der Verschiebehub des zweiten Kolbens beim Öffnungstakt. Beim Öffnungstakt wird der zweite Kolben nur über einen anfänglichen kurzen Hubweg abgedichtet und gebremst geführt, während er anschließend frei mit dem ersten Kolben mitfährt. Daraus resultiert über den größten Teil des Öffnungstaktes der Vorteil, dass Reaktionskräfte aus dem Verschiebewiderstand des zweiten Kolbens keinen Einfluss auf den vom ersten Kolben gesteuerten Öffnungstakt nehmen, und die Öffnungs- und Schließtaktzeiten verkürzt sind. Der Führungsring führt somit den zweiten Kolben abgedichtet nur über den Hubweg, der für den Reinigungstakt des zweiten Ventiltellers benötigt wird, entweder um den zweiten Ventilteller direkt in die erforderliche Lüftstellung für den Reinigungstakt zu bringen, oder den ersten Ventilteller in der Schließposition zu sichern und den Lüfthubweg beim Reinigungstakt des zweiten Ventiltellers zu begrenzen. Die abgedichtete Führung des zweiten, vom ersten baulich separierten Kolbens im auch den ersten Kolben enthaltenden, einzigen Antriebsvorrichtungsgehäuse bedeutet eine bauliche Vereinfachung, da der erste Kolben einfach ausgebildet werden kann. Die Funktionssicherheit ist erhöht, da Reaktionskräfte aus dem Bewegungswiderstand des zweiten Kolbens Verstellbewegungen des ersten Kolbens nicht beeinflussen. Da die erste Kammer von den Abdichtbereichen der ersten und zweiten Kolben im Antriebsvorrichtungsgehäuse begrenzt wird, die baulich voneinander getrennt agieren, lässt sich der Druckübertragungsweg für den Reinigungstakt des zweiten Ventiltellers sehr einfach seitlich und quer zur gemeinsamen Achse des Antriebsvorrichtungsgehäuses und des Ventilgehäuses direkt in die erste Kammer führen. Dies resultiert in kurzer Schaltzeit und geringem Druckmittelverbrauch für den Reinigungstakt, was den Druckaufbau sowie die Entlüftung betrifft, und in hoher Funktionssicherheit, da die Lüftstellung des zweiten Ventiltellers beim Reinigungstakt einwandfrei definiert ist. Ferner lässt sich Baulänge in Achsrichtung einsparen. Dabei ist das Antriebsvorrichtungsgehäuse zumindest in einen Gehäuseoberteil und einen Gehäusemittelteil unterteilt. Im Gehäusemittelteil ist der Führungsring vorgesehen (integriert oder eingesetzt), der im Vergleich zum Führungs- und Dichtdurchmesser für den ersten Kolben im Gehäuseoberteil einen kleineren Führungs- und Dichtdurchmesser für den zweiten Kolben definiert. Der Führungs- und Dichtdurchmesser für den zweiten Kolben lässt sich in Abhängigkeit des Verhältnisses der Kolben zueinander vom Führungs- und Dichtdurchmesser des ersten Kolbens auf möglichst kurze Schaltzeit beim Reinigungstakt und die hierfür erforderliche Kraft abstimmen. Der wenigstens eine Druckübertragungsweg zur ersten Kammer erstreckt sich durch den Gehäusemittelteil oder den Führungsring direkt in die erste Kammer. Der Druckübertragungsweg lässt sich so gestalten, dass möglichst wenig Drosselverluste beim Druckaufbau bzw. bei der Entlüftung entstehen.

Bei einer zweckmäßigen Ausführungsform ist zum Definieren der Führungs- und Dichtlänge für den zweiten Kolben im Führungsring und zum leichteren Wiedereintauchen des zweiten Kolbens beim Schließtakt im Führungsring eine konische Einführschräge für den zweiten Kolben bzw. dessen Dichtung vorgesehen.

Zweckmäßig ist bei einer weiteren Ausführungsform mit dem den Führungsring enthaltenden Gehäusemittelteil ein Gehäuseunterteil abgedichtet gefügt, der den dritten Kolben und eine dritte Kammer aufweist. Der Führungs- und Dichtdurchmesser des dritten Kolbens im Gehäuseunterteil kann dem Führungs- und Dichtdurchmesser des ersten oder zweiten Kolbens entsprechen oder, zweckmäßig, sogar kleiner sein als der des zweiten Kolbens (reduzierter Druckmittelverbrauch und kürzere Schaltzeit).

Ein besonders zweckmäßiges Ausführungsbeispiel der erfindungsgemäßen Antriebsvorrichtung ist so ausgelegt, dass die Druckübertragungswege zu den ersten und zweiten Kammern von einem diesen gemeinsamen Ventil ausgehen. Das Ventil besitzt zwei separate Außenanschlüsse, enthält ein druckgesteuertes Wechselventil und kann, vorzugsweise, seitlich außen am Antriebsvorrichtungsgehäuse bzw. am Gehäusemittelteil montiert sein, um kurze Druckübertragungswege zu erzielen. Dieses Ventil hat nicht nur die Aufgabe, den Druckaufbau für den jeweiligen Takt vorzunehmen, sondern auch gleichzeitig für die jeweilige Entlüftung verdrängten Druckmittels aus einer sich beim Takt verkleinernden Kammer zu sorgen. Dieses gemeinsame Ventil ist baulich einfach, funktionssicher und kostengünstig. Jedoch soll nicht ausgeschlossen werden, dass das gemeinsame Ventil ohne druckgesteuertes Wechselventil als Mehrwege-Magnetventil gestaltet wird, das gegebenenfalls einen einzigen Versorgungsdruck-Außenanschluss und einen Rücklaufanschluss sowie zwei Auslässe zu den ersten und zweiten Kammern besitzt, und nicht druckgesteuert, sondern magnetbetätigt für den jeweiligen Takt umgeschaltet wird.

Bei einer zweckmäßigen Ausführungsform enthält das Wechselventil im gemeinsamen Ventil in einer mit den zwei Außenanschlüssen und über Kammerauslässe mit den ersten und zweiten Kammern getrennt kommunizierenden Steuerkammer einen abgedichtet verschiebbaren Steuerkolben. Dieser Steuerkolben ist abhängig von der Druckbeaufschlagung des einen oder des anderen Außenanschlusses zwischen zumindest zwei Schaltstellungen umschaltbar. In der einen Schaltstellung wird der eine Außenanschluss gleichzeitig mit den zwei Kammerauslässen verbunden, während, vorzugsweise, der andere Außenanschluss gegenüber den Kammerauslässen abgesperrt ist. Auf diese Weise wird der zweite Kolben kräftemäßig neutralisiert und der erste Kolben beaufschlagt, wie dies für ein Doppelsitzventil mit einem zweiten, eine Schieberventilfunktion erbringenden Ventilteller zweckmäßig ist. In der anderen Schaltstellung wird der Kammerauslass zur ersten Kammer mit dem anderen Außenanschluss verbunden, um den zweiten Kolben vom ersten Kolben durch Druckbeaufschlagung der ersten Kammer wegzuschieben, während der Kammerauslass zur zweiten Kammer gegebenenfalls mit dem einen Außenanschluss verbunden ist, um über die Steuerkammer die zweite Kammer zu entlüften.

Bei einer anderen Ausführungsform, bei der das gemeinsame Ventil mit dem Wechselventil für ein Doppelsitzventil mit einem eine Sitzventilfunktion erbringenden zweiten Ventilteller konzipiert ist, enthält das Wechselventil in einer mit den zwei Außenanschlüssen und über Kammerauslässe mit den ersten und zweiten Kammern getrennt kommunizierenden Steuerkammer einen abgedichtet verschiebbaren Steuerkolben. Dieser Steuerkolben ist abhängig von der Druckbeaufschlagung des einen oder des anderen Außenanschlusses zwischen zwei Schaltstellungen umschaltbar. In der einen Schaltstellung wird der Kammerauslass zur zweiten Kammer mit dem einen Außenanschluss verbunden und der Kammerauslass zur ersten Kammer zum anderen Außenanschluss abgesperrt. Es wird somit bei Druckbeaufschlagung der zweiten Kammer nur der zweite Kolben in Richtung zum ersten Kolben hin druckbeaufschlagt. In der zweiten Schaltstellung wird der Kammerauslass zur zweiten Kammer mit dem einen Außenanschluss und der Kammerauslass zur ersten Kammer mit dem anderen Außenanschluss verbunden, um in der ersten Kammer Druck aufzubauen und den zweiten Kolben vom ersten Kolben wegzuverlagern, und gleichzeitig gegebenenfalls die zweite Kammer zu entlüften. Damit jedoch beim Druckbeaufschlagen nur der zweiten Kammer auch der erste Kolben druckbeaufschlagt wird, z.B. für den Öffnungstakt, ist bei dieser Ausführungsform im Abdichtbereich des zweiten Kolbens wenigstens eine in Strömungsrichtung von der ersten zur zweiten Kammer sperrende und in der entgegengesetzten Strömungsrichtung durchgängige Dichtung vorgesehen, so dass bei Druckbeaufschlagen nur der zweiten Kammer sich dieser Druck am ersten Kolben vorbei in die erste Kammer fortpflanzt und der erste Kolben auf diese Weise kräftemäßig neutralisiert wird. Diese Dichtung kann beispielsweise eine in einer Ringnut des zweiten Kolbens, z.B. in dessen Außenumfang angeordnete Nutringdichtung sein, die nach Art eines Rückschlagventils fungiert. Alternativ könnte bei einer in beiden Strömungsrichtungen sperrenden Dichtung des zweiten Kolbens auch im zweiten Kolben mindestens ein Rückschlagventil für diese Funktion vorgesehen sein.

Bei einer weiteren, zweckmäßigen Ausführungsform sind die ersten und zweiten Kolben an ihren dem Ventilgehäuse abgewandten Seiten jeweils mit einem Glockenkörper ausgestattet, wobei die Glockenkörper teleskopartig ineinandergreifen. Der innen im Glockenkörper des ersten Kolbens angeordnete Glockenkörper des zweiten Kolbens nimmt eine in Schließrichtung des ersten Ventiltellers wirkende Passivfederanordnung auf. Um axiale Baulänge zu sparen, überlappt sich die Passivfederanordnung in Achsrichtung zumindest mit einem Teil ihrer Axialerstreckung mit der Axialerstreckung einer Schließfederanordnung, die in dem Antriebsvorrichtungsgehäuse den ersten Kolben in Schließrichtung des Doppelsitzventils beaufschlagt. Die beiden Glockenkörper ermöglichen es, bei reduzierter Baulänge in Achsrichtung relativ lange Federanordnungen zu verwenden, die über die Hubwege der Kolben weitgehend lineare und/oder konstant bleibende Federraten haben können.

Im Hinblick auf eine baulich einfache Struktur der Antriebsvorrichtung ist bei einer weiteren Ausführungsform das eine Koppelelement eine Kolbenstange, die an einem Ende mit einer aus dem Antriebsvorrichtungsgehäuse nach außen geführten Hubbegrenzungsverlängerung verbunden sein kann. Diese Hubbegrenzungsverlängerung kann eine visuelle oder überwachbare Anzeige der Hubstellungen der Antriebsvorrichtung darstellen. Das andere Koppelelement kann hingegen eine die Kolbenstange aufnehmende Hülse sein. An der Hülse sind Mitnehmeranschläge für eine Passivfederanordnung, den dritten Kolben und entweder die Kolbenstange und/oder den zweiten Kolben vorgesehen. Die beiden Koppelelemente haben Mehrfachfunktionen, da sie nicht nur zur wahlweise wechselnden Bewegungs- und Kraftübertragung der Kolben eingesetzt werden, und auch die Verbindung zwischen jeweils aktiven Komponenten der Antriebsvorrichtung und des Doppelsitzventils übernehmen.

Schließlich ist bei einer besonders zweckmäßigen Ausführungsform der Antriebsvorrichtung ein Konzept gewählt, bei welchem die beiden Koppelelemente und die Hubbegrenzungsverlängerung auswechselbare Austauschkomponenten, beispielsweise eines Bausatzes, zum wahlweisen Anpassen der Antriebsvorrichtung an den jeweiligen Doppelsitzventiltyp sind. Die mit der Antriebsvorrichtung nach Modifikation steuerbaren Doppelsitzventiltypen sind solche, die entweder einen zweiten Ventilteller mit axialer oder axialer und radialer Abdichtung aufweisen (Aseptik-Doppelsitzventil) oder einen zweiten Ventilteller mit nur radialer Abdichtung im Sitz. Mit dem Austauschkomponentenbausatz ist die Antriebsvorrichtung somit wahlweise für jeden Doppelsitzventiltyp brauchbar. Dies soll aber nicht ausschließen, die Antriebsvorrichtung von vornherein nur auf einen Doppelsitzventiltyp auszulegen, und die Tauschmöglichkeit wegzulassen. Natürlich werden die Beaufschlagungsflächengrößen der Kolben und die jeweiligen Hubwege in der Antriebsvorrichtung auf die Baugröße des jeweils gesteuerten Doppelsitzventils abgestimmt, und auch auf die Druckverhältnisse in den Strömungswegen.

Anhand der Zeichnungen werden Ausführungsformen des Erfindungsgegenstandes erläutert. Es zeigen:
- Fig. 1: einen Längsschnitt einer Antriebsvorrichtung in drucklosem Zustand und in einer Anordnung kombiniert mit einem Doppelsitzventil eines ersten Typs, in einer Schließstellung des Doppelsitzventils,
- Fig. 2: die Anordnung von Fig. 1 beim bzw. nach dem Öffnungstakt des Doppelsitzventils,
- Fig. 3: die Anordnung von Fig. 1 bei einem Reinigungstakt eines unteren oder zweiten Ventiltellers,
- Fig. 4: die Anordnung von Fig. 1 bei einem Reinigungstakt eines oberen oder ersten Ventiltellers,
- Fig. 5: einen vergrößerten Ausschnitt der Antriebsvorrichtung von Fig. 1 bei Beginn des Öffnungstaktes analog zu Fig. 2,
- Fig. 6: einen vergrößerten Ausschnitt ähnlich dem von Fig. 5, am Beginn des Reinigungstaktes des unteren Ventiltellers analog zu Fig. 3,
- Fig. 7: eine Anordnung aus der Antriebsvorrichtung in drucklosem Zustand kombiniert mit einem Doppelsitzventil eines anderen Typs, in der Schließstellung des Doppelsitzventils,
- Fig. 8: einen Längsschnitt der Anordnung von Fig. 7 beim oder nach dem Öffnungstakt des Doppelsitzventils,
- Fig. 9: einen Längsschnitt der Anordnung von Fig. 7 beim Reinigungstakt eines unteren oder zweiten Ventiltellers,
- Fig. 10: eine Längsschnittansicht der Anordnung von Fig. 7 beim Reinigungstakt eines oberen oder ersten Ventiltellers des Doppelsitzventils,
- Fig. 11: einen Teilschnitt in vergrößerter Darstellung einer weiteren Ausführungsform der Antriebsvorrichtung, und
- Fig. 12: einen vergrößerten Detailschnitt zu Fig. 11.

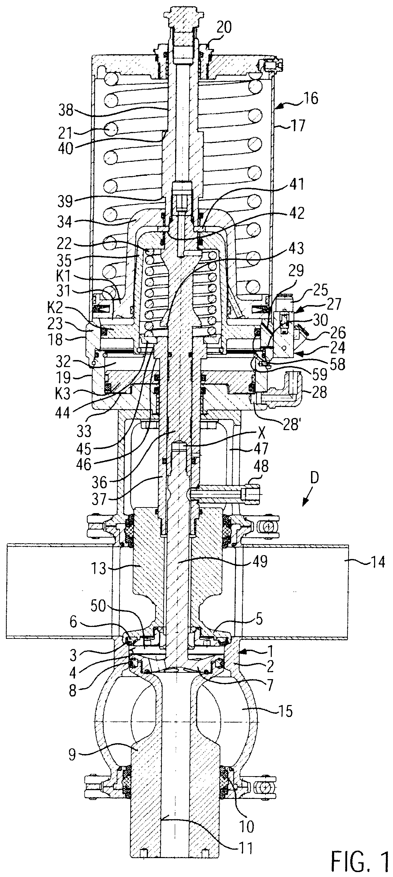

Die Fig. 1 bis 4 zeigen Längsschnitte jeweils einer Anordnung aus einer druckmittelbetätigbaren (druckluftbetätigbaren) Antriebsvorrichtung A und einem damit koaxial verbundenen Doppelsitzventil D, insbesondere für die Lebensmittelindustrie, wobei die Antriebsvorrichtung A in einer ersten Ausführungsform mit dem Doppelsitzventil D eines Typs kombiniert ist, bei dem ein erster Ventilteller 5 eine Sitzventilfunktion erbringt, hingegen ein zweiter Ventilteller 7 eine Schieberventilfunktion.

Das Doppelsitzventil D in den Fig. 1 bis 4 weist ein Ventilgehäuse 1 auf, welches zwischen zwei Strömungswegen 14, 15 einen Sitz 2 definiert, der eine beispielsweise konische Sitzfläche 3 für eine entweder nur axiale oder axiale und radiale Abdichtung 6 des ersten Ventiltellers 5 (oberer Ventilteller) definiert, und eine beispielsweise zylindrische Schieberbohrung 4 für eine nur radiale Abdichtung 8 des zweiten Ventiltellers 7 (unterer Ventilteller 7). Der untere Ventilteller 7 ist, vorzugsweise, mit einem Druckausgleichskolben 9 verbunden, der im Ventilgehäuse 1 in einer Dichtung 10 abgedichtet verschieblich ist und einen Ablaufkanal 11 enthält, der über Durchgänge 12 im zweiten Ventilteller 7 mit einem Leckageraum 50 zwischen den ersten und zweiten Ventiltellern 5, 7 kommuniziert. Der erste Ventilteller 5 kann ebenfalls mit einem Druckausgleichskolben 13 verbunden sein, der sich koaxial zum Druckausgleichskolben 9 in Richtung einer gemeinsamen Achse X des Doppelsitzventils D und der Antriebsvorrichtung A nach oben erstreckt. In den über den Sitz 2 entweder miteinander verbindbaren oder voneinander trennbaren Strömungswegen 14, 15 können in der in Fig. 1 gezeigten Schließstellung des Doppelsitzventils D bei druckloser Antriebsvorrichtung A unterschiedliche Druckverhältnisse herrschen.

Die Antriebsvorrichtung A weist ein allgemein topfförmiges, einziges Antriebsvorrichtungsgehäuse 16 auf, das z.B. aus einem Gehäuseoberteil 17, einem Gehäusemittelteil 18 und einem Gehäuseunterteil 19 gefügt sein kann. Im oberen Ende des Antriebsvorrichtungsgehäuses 16 kann ein Schraubanschlag 20 vorgesehen sein, der u.a. Hubjustierungen von inneren Komponenten der Antriebsvorrichtung A ermöglicht. Im Gehäuseoberteil 17 ist eine Federanordnung 21 aus mindestens beispielsweise einer Schraubenfeder enthalten, die sich am oberen Ende des Gehäuseoberteils 17 einerseits und an einem im Gehäuseoberteil 16 abgedichtet verschiebbar geführten ersten Kolben K1 andererseits abstützt. Die Federanordnung 21 ist vorgespannt. Unterhalb des ersten Kolbens K1 (hier des Hauptkolbens für den Öffnungstakt) ist baulich von diesem getrennt ein zweiter Kolben K2 angeordnet, der im Gehäusemittelteil 18 in einem z.B. dort integral geformten oder eingesetzten Führungsring 23 abgedichtet verschieblich über eine Hubstrecke geführt wird, die kürzer ist als der Hub, den der zweite Kolben K2 beim Öffnungstakt ausführt. Der Abdicht- und Führungsdurchmesser des zweiten Kolbens K2 im Führungsring 23 ist kleiner als der Abdicht- und Führungsdurchmesser des ersten Kolbens K1 im Gehäuseoberteil 17. Innerhalb zumindest eines Teils der axialen Erstreckung der Federanordnung 21 ist eine Passivfederanordnung 22 aus zumindest beispielsweise einer Schraubenfeder vorgesehen, die u.a. zum Beaufschlagen des ersten Ventiltellers 5 in Schließrichtung und relativ zum zweiten Ventilteller 7 dient.

Die ersten und zweiten Kolben K1, K2 weisen jeweils an der dem Doppelsitzventil D abgewandten Seite einen Glockenkörper 34, 35 auf. Die Glockenkörper 34, 35 sind teleskopartig ineinandergesteckt, derart, dass der Glockenkörper 35 des zweiten Kolbens K2 im Inneren des Glockenkörpers 34 des ersten Kolbens K1 aufgenommen ist und ein oberes Widerlager für die Passivfederanordnung 22 definiert, die in dem Glockenkörper 35 enthalten ist. Das untere Ende der Passivfederanordnung 22 stützt sich auf einem Federwiderlager 44 im Glockenkörper 35 ab. Der zweite Kolben K2 weist wenigstens eine umfangsseitige radiale Dichtung 58 auf, die einen Abdichtbereich mit dem Führungsring 23 bildet, während eine umfangsseitige Dichtung des ersten Kolbens K1 mit der Innenwand des Gehäuseoberteils 17 einen Abdichtbereich des ersten Kolbens K1 definiert. Zwischen den ersten und zweiten Kolben K1, K2 wird von den beiden Abdichtbereichen eine erste Kammer 31 begrenzt. Im Gehäuseunterteil 19 ist ein dritter Kolben K3 abgedichtet verschieblich, dessen Führungs- und Abdichtdurchmesser kleiner sein kann, als der Führungs- und Abdichtdurchmesser des zweiten Kolbens K2, und der im Gehäuseunterteil 19 eine dritte Kammer 33 begrenzt. Zwischen den zweiten und dritten Kolben K2 und K3 wird eine zweite Kammer 32 definiert.

Den ersten und zweiten Kammern 31, 32 ist ein gemeinsames Ventil 24 zugeordnet, das beispielsweise seitlich außen am Gehäusemittelteil 18 montiert ist, und von welchem ein Druckübertragungsweg 29 seitlich, d.h. quer zur Richtung der gemeinsamen Achse X, durch das Antriebsvorrichtungsgehäuse 16 direkt in die erste Kammer 31 führt, während ein zweiter Druckübertragungsweg 30 ebenfalls durch den Gehäusemittelteil 18 bzw. den Führungsring 23 direkt zur zweiten Kammer 32 führt. Das Ventil 24 ist somit gemeinsam beiden Kammern 31, 32 funktionell zugeordnet und weist zwei getrennte Außenanschlüsse 25, 26 sowie ein innenliegendes Wechselventil 27 auf, das druckgesteuert ist. Zur dritten Kammer 33 erstreckt sich ein Druckübertragungsweg 28' von einem Außenanschluss 28, der seitlich beispielsweise am Gehäuseunterteil 19 montiert ist.

In der Ausführungsform der Antriebsvorrichtung A in den Fig. 1 bis 4 ist der zweite Kolben K2 permanent und starr über ein als Kolbenstange ausgebildetes Koppelelement 36 mit einem Ventiltellerschaft 49 des zweiten Ventiltellers 7 verbunden, d.h. zwischen einem Anschlagring 41 und einem Anschlag 42 des Koppelelementes 36 axial fixiert. Hingegen sind der erste Kolben K1 und der dritte Kolben K3 zumindest begrenzt relativ zum Koppelelement 36 axial verstellbar. Ein weiteres Koppelelement 37 in Form einer Hülse ist über den Druckausgleichskolben 13 mit dem ersten Ventilteller 5 fest verbunden, z.B. verschraubt. Am freien Ende des Koppelelementes 36 ist eine Hubbegrenzungsverlängerung 38 montiert, z.B. aufgeschraubt, die sich durch den Schraubanschlag 20 nach außen aus dem Antriebsvorrichtungsgehäuse 16 erstreckt, und eine visuelle und/oder abtastbare Hubstellungsanzeige und eine Hubbegrenzung definiert. Die Hubbegrenzungsverlängerung 38 weist einen nach unten orientierten Anschlag 39 für die Oberseite des Glockenkörpers 34 des ersten Kolbens K1 und einen Anschlag 40 zur Zusammenarbeit mit dem Schraubanschlag 20 auf, und fixiert den Anschlagring 41 am oberen Ende des Koppelelementes 36. Das Federwiderlager 44 sitzt auf einem Anschlag 45 des Koppelelementes 37, das einen weiteren Anschlag 46 für den dritten Kolben K3 besitzt und auch mit seinem oberen freien Ende einen Anschlag für einen Anschlag 43 am Koppelelement 36 bildet.

Die Antriebsvorrichtung A bzw. das Antriebsvorrichtungsgehäuse 16 ist mit dem Ventilgehäuse 1 über ein koaxiales Laternengehäuse 47 verbunden, in welchem ein Reinigungsmediumanschluss 48 in dem Koppelelement 37 angeordnet ist, der mit einem Reinigungsmediumkanal zwischen dem Ventiltellerschaft 49, dem unteren Ende des Koppelelementes 37 und dem Druckausgleichskolben 13 und dem Leckageraum 50 zwischen den ersten und zweiten Ventiltellern 5, 7 kommuniziert. Der Reinigungsmediumanschluss 48 kann für einen externen Reinigungstakt benutzt werden, beispielsweise um in der in Fig. 1 gezeigten Schließstellung des Doppelsitzventils D den Leckageraum 50, die Unter- und Oberseiten der ersten und zweiten Ventilteller 5, 7 und die Schieberbohrungswand 4 im Sitz 2 zu reinigen, wobei das Reinigungsmedium mit entfernten Verunreinigungen über die Durchgänge 12 und den Kanal 11 abgeführt wird.

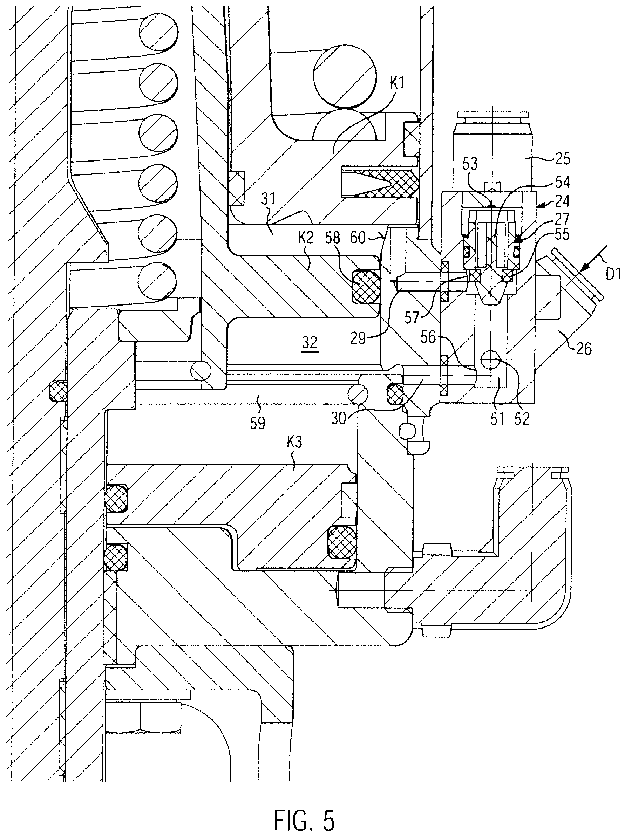

In Fig. 5 ist der Aufbau des den ersten und zweiten Kammern 31, 32 gemeinsamen Ventils in größerem Maßstab dargestellt. Das Ventil 24 enthält für das Wechselventil 27 eine Steuerkammer 51 mit getrennten Kammerauslässen 56, 57 zu den Druckübertragungswegen 30, 29 sowie getrennten Einlässen 52, 53 von den Außenanschlüssen 26, 25. In der Steuerkammer 51 ist ein Steuerkolben 54 axial druckabhängig zwischen zwei Schaltstellungen verstellbar, abhängig davon, ob der eine Außenanschluss 25 oder der andere Außenanschluss 26 druckbeaufschlagt wird. Der Steuerkolben 54 besitzt einen Dichtbund 55 und sperrt in der in Fig. 5 gezeigten einen Schaltstellung des Wechselventils 27 bei Druckbeaufschlagung des Außenanschlusses 26 (Druckimpuls D1) den Einlass 53 ab, während der Einlass 52 mit beiden Kammerauslässen 56, 57 in Verbindung ist. Fig. 5 zeigt im Übrigen die radiale Abdichtung 58 des zweiten Kolbens K2, beispielsweise einen O-Ring in einer Umfangsnut 57. Der O-Ring arbeitet mit dem Führungsring 23 zusammen, der oberseitig eine konische Eintauchschräge 60 aufweist, die auch den Abdichtbereich des zweiten Kolbens K2 im Führungsring 23 nach oben begrenzt.

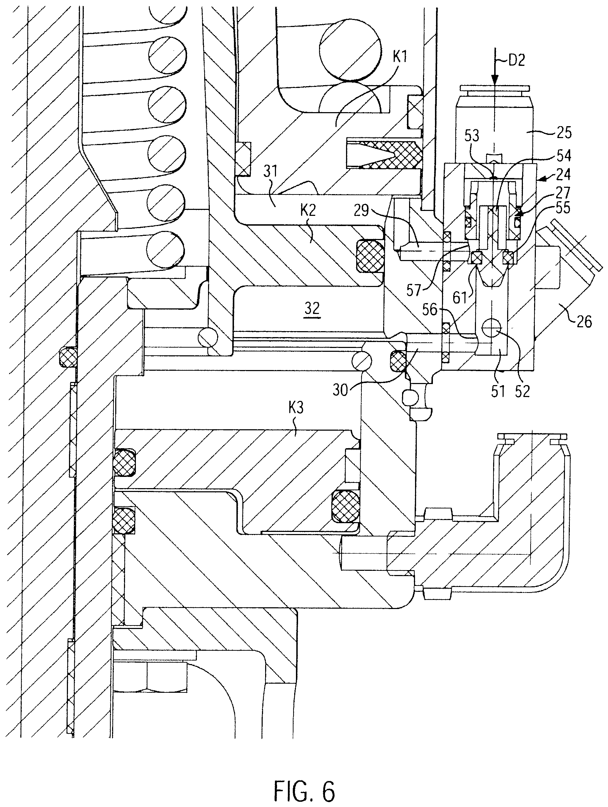

Fig. 6 zeigt die zweite Schaltstellung des Wechselventils 27 bei einer Druckmittelbeaufschlagung des Außenanschlusses 25 mit einem Druckimpuls D2. Der Steuerkolben 54 wird durch den Druckimpuls D2 mit seinem Dichtbund 55 in der Steuerkammer 52 auf einen Dichtsitz 61 aufgesetzt, so dass der Einlass 53 freigegeben aber von dem Einlass 52 separiert ist. Der Druckimpuls D2 wird über den Kammerauslass 57 und den Druckübertragungsweg 29 direkt in die erste Kammer 31 und zwischen die Abdichtbereiche der ersten und zweiten Kolben K1 und K2 eingebracht. Fig. 6 zeigt im Gehäuseunterteil 19 ferner einen Anschlagring 59, der den Hubweg des dritten Kolbens K3 nach oben begrenzt.

Anstelle des in den Fig. 1 bis 6 am Gehäusemittelteil 18 montierten Ventils 24 könnte ein Mehrwege-Magnetventil verwendet werden, das zwischen den zumindest zwei Schaltstellungen analog zu den Fig. 5 und 6 umschaltbar ist. Das Magnetventil oder das Ventil 24 könnte ferner alternativ an einer von der Antriebsvorrichtung A separierten Stelle angeordnet und mit Druckleitungen oder Druckschläuchen mit den Außenanschlüssen 25, 26 verbunden sein.

In der Schließstellung in Fig. 1 ist die Passivfederanordnung 22 axial etwas komprimiert bzw. vorgespannt.

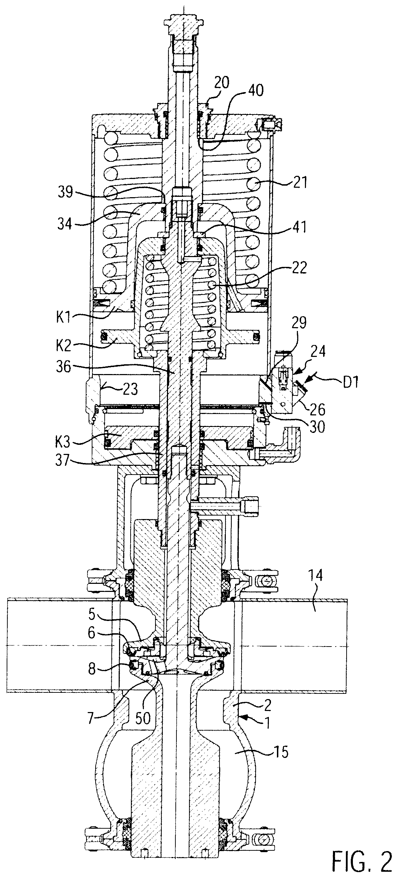

Fig. 2 zeigt die Anordnung von Fig. 1 am Beginn eines bzw. nach einem Öffnungstakt, dessen Ablauf nachfolgend erläutert wird.

Zur Betätigung des Doppelsitzventils D beim Öffnungstakt (Fig. 2) wird auf den Außenanschluss 26 in Fig. 5 der Druckimpuls D1 aufgebracht und über beide Druckübertragungswege 29, 30 gleichzeitig in die ersten und zweiten Kammern 31, 32 gebracht, so dass der zweite Kolben K2 kräftemäßig neutralisiert ist, und sich der erste Kolben K1 nach oben bewegt. Über die vorgespannte Passivfederanordnung 22 folgt der zweite Kolben K2 der Bewegung des ersten Kolbens K1, wobei über den Anschlagring 41 das Koppelelement 36 den zweiten Ventilteller 7 nach oben zieht, bis dieser an der axialen Abdichtung 6 des ersten Ventiltellers 5 zur Anlage kommt und der Leckageraum 50 abgedichtet ist. Bei der weiteren Bewegung der ersten und zweiten Kolben K1, K2 werden die ersten und zweiten Ventilteller 5, 7 in die Stellung von Fig. 2 gebracht, wobei der Glockenkörper 34 des ersten Kolbens K1 zunächst bis zum Anschlag 39 einen Leerhub auf der Hubbegrenzungsverlängerung 38 ausführt, und die Hubbegrenzungsverlängerung 38 schließlich mit dem Anschlag 40 den Schraubanschlag 20 erreicht. Die Passivfederanordnung 22 entspannt sich dabei etwas, wobei sie jedoch über das Federwiderlager 44 und den Anschlag 45 des Koppelelementes 37 die ersten und zweiten Ventilteller 5, 7 in gegenseitiger kraftschlüssiger Anlage hält. Der zweite Kolben K2 verlässt den Führungsring 23. Der Glockenkörper 34 hat sich bis zum Anschlag 39 von dem am Anschlagring 41 abgefangenen Glockenkörper 35 entfernt. Die Federanordnung 21 ist komprimiert. Der Strömungsweg 14 ist mit dem Strömungsweg 15 verbunden (Öffnungsendstellung in Fig. 2).

Zur erneuten Herstellung der Schließstellung von Fig. 1 wird der Druckimpuls D1 abgebaut. Daraufhin stellt die Federanordnung 21 die Schließstellung her, wobei zunächst unter der Wirkung der Passivfederanordnung 22 die ersten und zweiten Ventilteller 5, 7 aneinandergepresst bleiben, bis der erste Ventilteller 5 im Sitz 2 aufgesetzt hat, ehe die Federanordnung 21 über den Glockenkörper 34 und den Anschlagring 41 das Koppelelement 36 mit dem zweiten Ventilteller 7 weiter nach unten bis in die in Fig. 1 gezeigte Position verschiebt, in der die ersten und zweiten Ventilteller 5, 7 unter Bildung des Leckageraums 50 voneinander beabstandet sind.

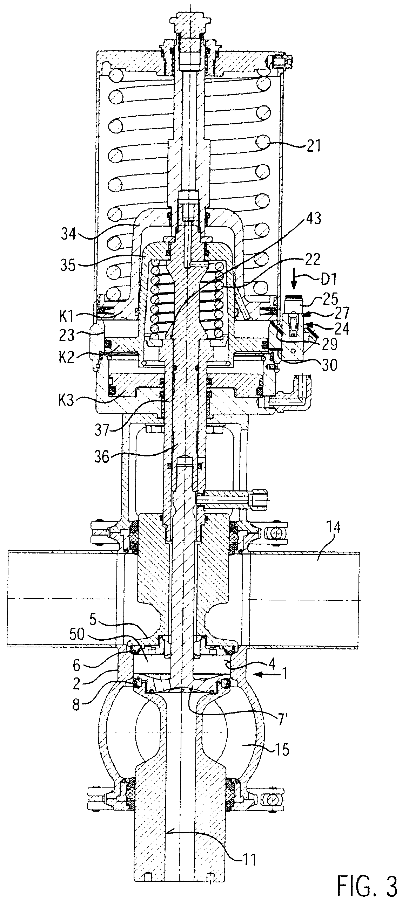

Nachstehend wird der Ablauf beim in Fig. 3 gezeigten Reinigungstakt des zweiten Ventiltellers 7 unter Beiziehen von Fig. 6 erläutert. Ausgehend von der in Fig. 1 gezeigten Schließstellung des Doppelsitzventils D wird der Druckimpuls D2 auf den Außenanschluss 25 aufgebracht, der den Steuerkolben 54 in die in Fig. 6 gezeigte zweite Schaltstellung bringt. Über den Druckübertragungsweg 30 und den Einlass 52 ist die zweite Kammer 32 mit dem anderen Außenanschluss 26 verbunden, gegebenenfalls um die zweite Kammer zu entlüften bzw. verdrängtes Druckmedium abströmen zu lassen. Der Druckimpuls D2 wird über den seitlichen Druckübertragungsweg 29 direkt in die erste Kammer 31 geleitet, wobei der zweite Kolben K2 unter zunehmender Kompression der Passivfederanordnung 42 nach unten bewegt wird und über das Koppelelement 36 den zweiten Ventilteller 7 nach unten in eine definierte Spaltstellung aus dem Sitz 2 herausfährt. Die Spaltstellung des zweiten Ventiltellers 7 beim Reinigungstakt wird durch den Anschlag 43 des Koppelelementes 36 definiert, der sich auf das obere Ende des Koppelelementes 37 aufsetzt, das über den ersten Ventilteller 5 im Sitz 2 abgestützt ist. Nun kann entweder Reinigungsmedium aus dem Strömungsweg 15 die radiale Abdichtung 8, den zweiten Ventilteller 7, den Leckageraum 50, die Unterseiten der axialen Abdichtung 6 und des ersten Ventiltellers 5 sowie den dort vorliegenden Teil des Ventiltellerschaftes 49 reinigen und mit Verunreinigungen über den Kanal 11 abfließen. Alternativ könnte auch eine externe Reinigung vorgenommen werden, beispielsweise über den in Fig. 1 gezeigten Reinigungsanschluss 48. Der Strömungsweg 14 bleibt dabei zuverlässig vom Strömungsweg 15 und vom Leckageraum 50 isoliert.

Nach dem Reinigungstakt des zweiten Ventiltellers 7, der gegebenenfalls oszillierend ausgeführt wird, wird der Druckimpuls D2 abgebaut. Die sich über den ersten Ventilteller 5 am Sitz 2 abstützende Passivfederanordnung 22 zieht den zweiten Kolben K2 wieder in die in Fig. 1 gezeigte Position innerhalb des Führungsrings 23. Während des Reinigungstaktes bleibt der zweite Kolben K2 im Dichtungs- und Führungsbereich des Führungsrings 23.

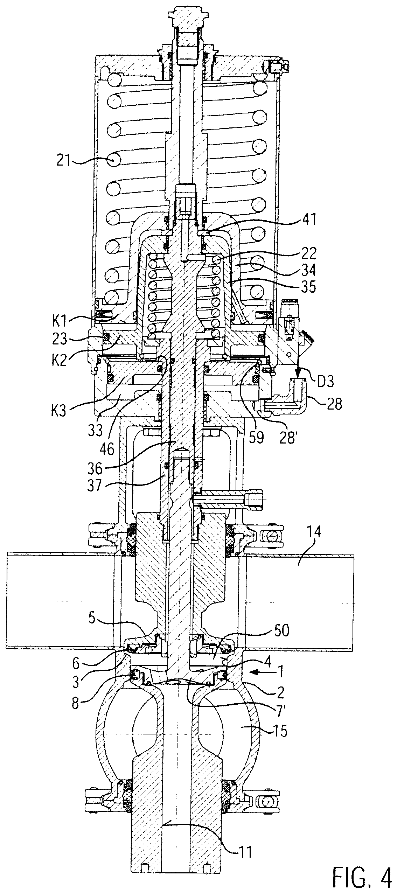

Nachfolgend wird der Ablauf beim Reinigungstakt des ersten Ventiltellers 5 gemäß Fig. 4 erläutert.

Ausgehend von der Schließposition von Fig. 1 wird ein Druckimpuls D3 in den Außenanschluss 28 eingebracht und über den Druckübertragungsweg 28' in die dritte Kammer 33 unterhalb des dritten Kolbens K3 geleitet. Der zweite Ventilteller 7 bleibt durch die Federanordnung 21 in der in Fig. 1 gezeigten Position im Sitz 2. Der dritte Kolben K3 erreicht den Anschlag 46 des Koppelelementes 37 und zieht über das Koppelelement 37 den ersten Ventilteller 5 in eine Spaltstellung nach oben, wobei diese Spaltstellung durch Anschlag des dritten Kolbens K3 an dem Sicherungsring 59 (Fig. 5) definiert ist. Reinigungsmedium kann aus dem Strömungsweg 14 den ersten Ventilteller 5, dessen axiale oder axiale und radiale Abdichtung 6, die Unterseite des ersten Ventiltellers 5, die Sitzfläche 3, die Schieberbohrung 4 bis zur radialen Abdichtung 8 des zweiten Ventiltellers 7, die Oberseite des zweiten Ventiltellers 7 sowie einen Teil dessen Ventiltellerschaftes 49 reinigen und durch den Kanal 11 abströmen. Alternativ oder additiv könnte über den Reinigungsmediumanschluss 48 und durch den Leckageraum 50 in den Strömungsweg 14 auch eine externe Reinigung vorgenommen werden.

Zur Rückstellung des Doppelsitzventils in die in Fig. 1 gezeigte Schließstellung wird der Druckimpuls D3 abgebaut, so dass die komprimierte Passivfederanordnung 22 das Koppelelement 37 nach unten verschiebt und über den Anschlag 46 den dritten Kolben K3 mitnimmt.

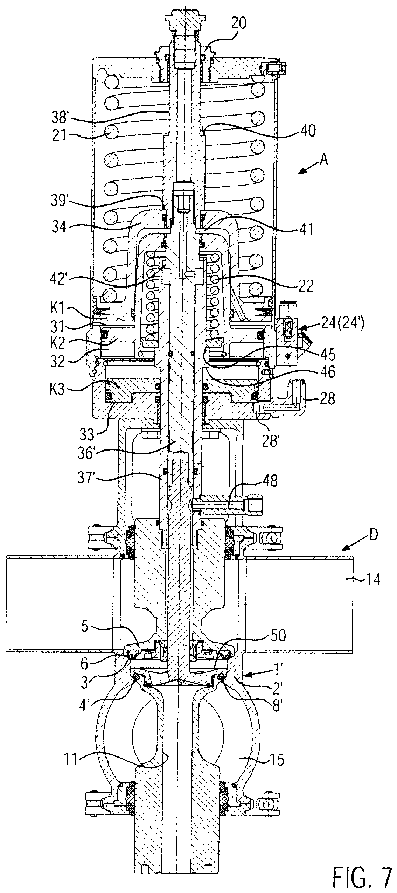

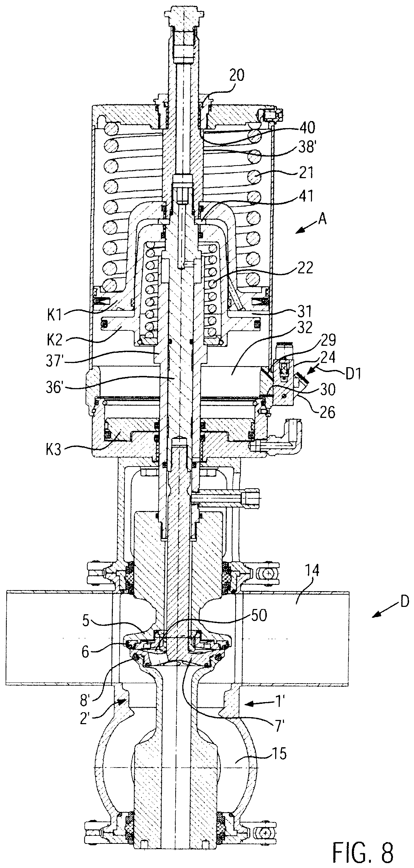

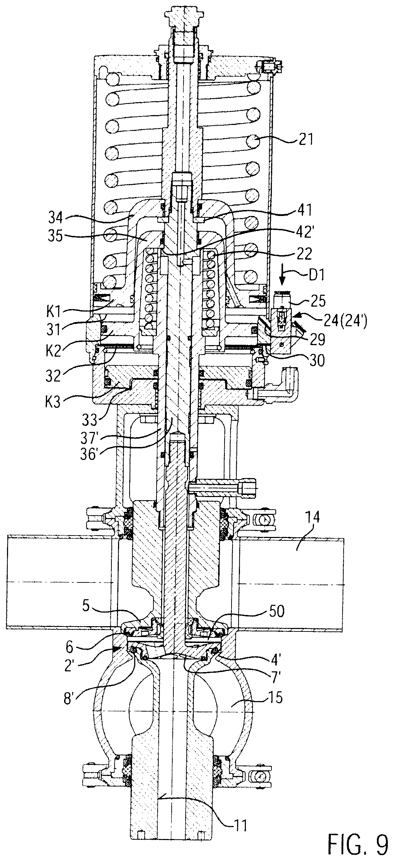

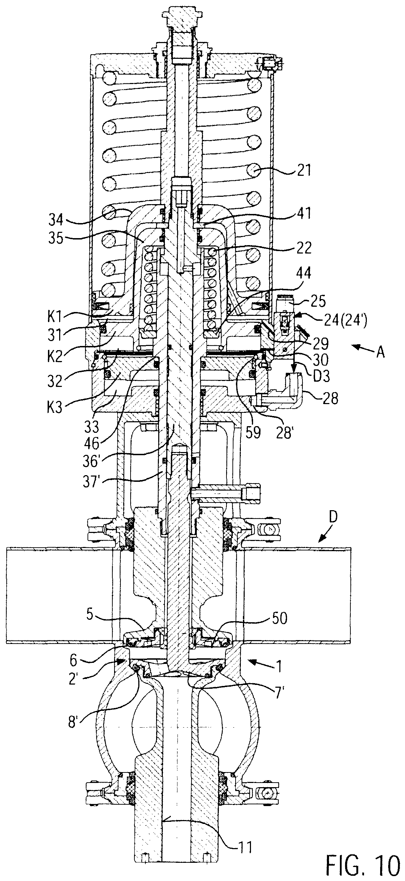

Die Fig. 7 bis 10 stellen analog zu den Fig. 1 bis 4 jedoch für eine Anordnung einer anderen Ausführungsform die Schließstellung des Doppelsitzventils D, gesteuert über die Antriebsvorrichtung A (Fig. 7), die Öffnungsstellung (Fig. 8), den Reinigungstakt des zweiten Ventiltellers 7' (Fig. 9) und den Reinigungstakt des ersten Ventiltellers 5 (Fig. 10) dar, wobei gegebenenfalls auch entweder die Fig. 5 und 6 oder die Fig. 11 und 12 für diese zweite Ausführungsform der Anordnung zu berücksichtigen sind. Die Anordnung in den Fig. 7 - 10 unterscheidet sich sowohl bezüglich der Antriebsvorrichtung A als auch des damit kombinierten Doppelsitzventils D von der von Fig. 1.

Das Doppelsitzventil in den Fig. 7 bis 10 ist ein Typ, der beispielsweise für aseptische Konditionen benötigt wird und bei dem der zweite Ventilteller 7' eine Sitzventilfunktion mit einer axialen oder axialen und radialen Abdichtung 8' an einer konischen Sitzfläche 4' des Sitzes 2' im Ventilgehäuse 1' erbringt, analog zur Sitzventilfunktion des ersten Ventiltellers 5. Bei diesem Doppelsitzventiltyp ist somit beim Reinigungstakt des zweiten Ventiltellers 7' dessen Lüftbewegung von der Sitzfläche 4' in Richtung zur Antriebsvorrichtung A erforderlich, im Unterschied zu der in den Fig. 1 bis 4 gezeigten Bewegung des zweiten Ventiltellers 7 beim Reinigungstakt in Richtung weg von der Antriebsvorrichtung A. Aus diesem Grund sind in den Fig. 7 in der Antriebsvorrichtung A ein anderes Koppelelement 36' für den zweiten Ventilteller 7', ein anderes Koppelelement 37' für den ersten Ventilteller 5 und eine andere Hubbegrenzungsverlängerung 38' vorgesehen, als in den Fig. 1 bis 4. Diese Komponenten können Austauschkomponenten, beispielsweise eines Bausatzes, der Antriebsvorrichtung A sein, um diese wahlweise für den einen oder den anderen Doppelsitzventiltyp modifizieren zu können, jedoch die anderen Komponenten der Antriebsvorrichtung A weiterzuverwenden.

In Fig. 7 ist das Koppelelement 37' soweit nach oben verlängert, dass es sich bis annähernd zum oberen Ende der Passivfederanordnung 22 erstreckt und mit seinem oberen Ende einen Anschlag für den Glockenkörper 35 des zweiten Kolbens K2 bildet. Das Koppelelement 36' ist ohne den Anschlag 43 der Fig. 1 bis 4 ausgebildet und weist den Anschlag 42' in größerem Abstand vom Anschlagring 41 auf als beim Anschlag 42 in den Fig. 1 bis 4. Der Anschlagring 41 ist durch die Hubbegrenzungsverlängerung 38' auf dem Koppelelement 36' festgelegt, jedoch mit größerem Abstand von dem Anschlag 42', so dass der Glockenkörper 35 des zweiten Kolbens K2 einen relativen Leerhub auf dem Koppelelement 36' auszuführen vermag. Hingegen ist durch den Anschlag 39' der Hubbegrenzungsverlängerung 38' der Glockenkörper 34 auf dem Anschlagring 41 fixiert, so dass der erste Kolben K1 keinen Leerhub relativ zum Koppelelement 36' auszuführen vermag. In den Fig. 7 bis 10 ist der erste Kolben K1 nicht nur der Hauptkolben für den Öffnungstakt, sondern dient der erste Kolben K1 auch zum Ausführen des Reinigungstaktes des unteren Ventiltellers 7', während der zweite Kolben K2 dafür sorgt, dass der erste Ventilteller 5 auf den Sitz 2' aufgedrückt bleibt, und die Spaltstellung des zweiten Ventiltellers 7' beim Reinigungstakt definiert wird.

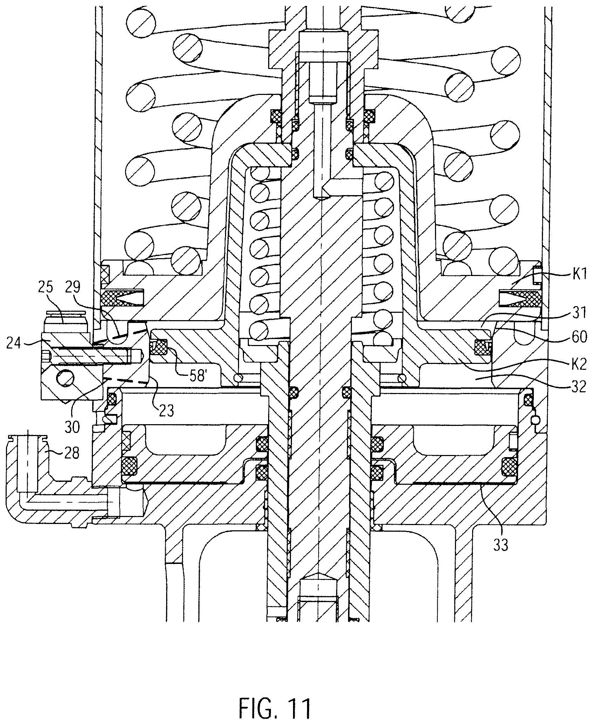

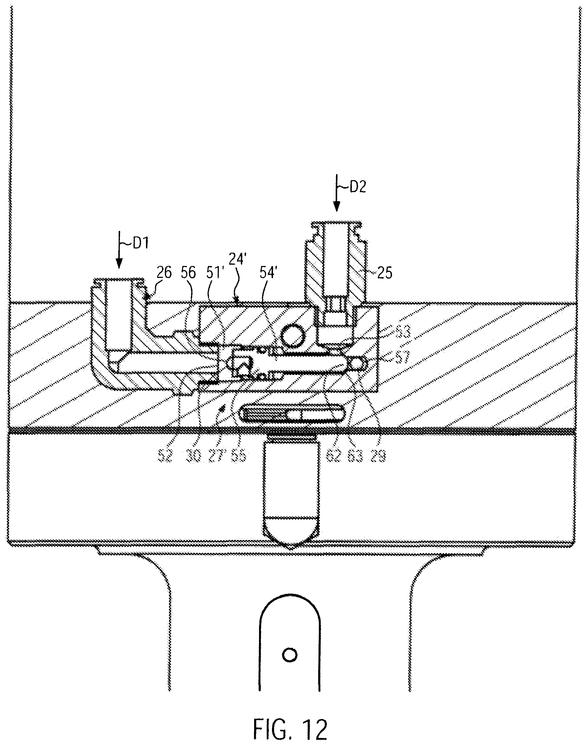

Das den ersten und zweiten Kammern 31, 32 gemeinsame Ventil 24 kann wie in den Fig. 5, 6 ausgebildet sein, oder ist alternativ wie das in Fig. 12 gezeigte Ventil 24' mit dem Wechselventil 27' ausgebildet (oder alternativ als Mehrwege-Magnetschaltventil), vorausgesetzt, dass die Detailvariante gemäß Fig. 11 im zweiten Kolben K2 vorgesehen ist.

In Fig. 11 ist im Unterschied zu Fig. 5 nämlich die radiale Abdichtung 58 des zweiten Kolbens K2 von Fig. 5 durch eine radiale Abdichtung 58' ersetzt, die eine Rückschlagventilwirkung besitzt, d.h., nur in Strömungsrichtung von der ersten Kammer 31 in die zweite Kammer 32 abdichtet, hingegen in Strömungsrichtung von der zweiten Kammer 32 in die erste Kammer 31 durchgängig ist. Beispielsweise ist diese Abdichtung 58' ein Nutdichtring mit einer Dichtlippe, die bei höherem Druck in der zweiten Kammer 32 abgehoben wird und den Druck der zweiten Kammer 32 in die erste Kammer 31 überträgt. Deshalb kann das Ventil 24' so ausgelegt sein, dass in der einen Schaltstellung des Wechselventils 27' analog zu Fig. 5 nicht beide Druckübertragungswege 29, 30 mit dem Außenanschluss 26 verbunden sind, sondern die Druckübertragung gemäß Fig. 12 erfolgt.

Das Ventil 24' mit seinem Wechselventil 27' enthält in Fig. 12 in der Steuerkammer 51' den abgedichtet verschiebbaren Steuerkolben 54', der mit seinem rechtsseitigen Ende 62 in der einen Schaltstellung (Druckimpuls D1 im Außenanschluss 26) den Einlass 53 von dem Kammerauslass 57 zum Druckübertragungswegs 29 trennt und dazu mit einem Ventilsitz 63 in der Steuerkammer 51' zusammenwirkt, während sein Dichtbund 55 die Einlässe 53, 52 voneinander isoliert, wie auch die Kammerauslässe 57, 56. In der einen Schaltstellung in Fig. 12 (Druckimpuls D1 für den Öffnungstakt des Doppelsitzventils D) wird der Druckimpuls D1 nur in den Druckübertragungsweg 30 und somit in die zweite Kammer 32 (Fig. 7) eingespeist und über die radiale dann durchgängige Abdichtung 58' (Fig. 11) in die erste Kammer 31 übertragen. In der anderen (nicht gezeigten) Schaltstellung des Wechselventils 27' in Fig. 12 wird der Steuerkolben 54' aus der in Fig. 12 gezeigten Lage nach links verschoben, ohne die Verbindung zwischen dem Einlass 52 und dem Druckübertragungsweg 30 zu unterbrechen, und wird die Verbindung zwischen dem Druckübertragungsweg 29 und dem Außenanschluss 25 hergestellt, so dass ein Druckimpuls D2, aufgebracht auf den Außenanschluss 25, über den Druckübertragungsweg 29 nur in die erste Kammer 31 eingebracht wird. Dieser Druckimpuls vermag die Abdichtung 58' im zweiten Kolben K2 nicht zur zweiten Kammer 32 zu umgehen, so dass der zweite Kolben K2 nach unten verschoben wird.

Die in Fig. 7 dargestellte Schließstellung des Doppelsitzventils D wird durch die Federanordnung 21 und die Passivfederanordnung 22 gehalten. Die ersten und zweiten Ventilteller 5, 7' sind jeweils kraftschlüssig aufgesetzt. Die Strömungswege 14, 15 sind voneinander getrennt. Gegebenenfalls wird der Leckageraum 50 zwischen den ersten und zweiten Ventiltellern 5, 7' über den Reinigungsmediumanschluss 48 gereinigt, einschließlich der in diesem Bereich vom Reinigungsmedium bestrichenen Oberflächen und Komponenten.

Nachfolgend wird der Ablauf beim in Fig. 8 gezeigten Öffnungstakt erläutert. Ausgehend von der Schließstellung von Fig. 7 wird am Außenanschluss 26 der Druckimpuls D1 aufgebracht, der über den Druckübertragungsweg 30 in die zweite Kammer 32 übertragen wird (Schaltstellung des Wechselventils 27' in Fig. 12, oder Schaltstellung des Wechselventils 27 in Fig. 5). Der erste Kolben K1 wird gegen die Federanordnung 21 nach oben verfahren und nimmt den zweiten Ventilteller 7' mit, wobei sich die Passivfederanordnung 22 etwas entspannt und das Koppelelement 37' nach unten drückt, so dass der erste Ventilteller 5 seine Schließposition noch aufrecht hält, bis er schließlich vom zweiten Ventilteller 7' mitgenommen wird. Dann bewegen sich die ersten und zweiten Kolben K1, K2 gemeinsam weiter nach oben bis in die in Fig. 8 gezeigte Öffnungsstellung, wobei der Leckageraum 50 durch die Anpressung zwischen den ersten und zweiten Ventiltellern 5, 7' dank der Passivfederanordnung 22 nach außen abgesperrt ist. Die Strömungswege 14, 15 sind miteinander verbunden. Der zweite Kolben K2 fährt aus dem Führungsring 23 heraus.

Zum Rückstellen in die Schließstellung wird der Druckimpuls D1 abgebaut, so dass die Federanordnung 21 die ersten und zweiten Ventilteller 5, 7' wieder nach unten bis in die Schließstellung von Fig. 7 bringt, und zwar zunächst bis zum Aufsetzen des ersten Ventiltellers 5, ehe nachfolgend der zweite Ventilteller 7' durch die Wirkung der Federanordnung 21 vom ersten Ventilteller 5 gelöst und im Sitz 2' aufgesetzt wird.

Anhand Fig. 9 wird der Ablauf beim Reinigungstakt des zweiten Ventiltellers 7' erläutert. Am Außenanschluss 25 des Ventils 24 oder 24' wird der Druckimpuls D2 aufgebracht, der zumindest über den Druckübertragungsweg 29 in die erste Kammer 31 eingeleitet wird. Der zweite Kolben K2 wird dadurch relativ zum ersten, an der Federanordnung 21 abgestützten Kolben K1 unter Kompression der Passivfederanordnung 22 auf dem Koppelelement 36' nach unten verfahren, bis er auf dem oberen Ende des Koppelelementes 37' aufsetzt, anhält und den ersten Ventilteller 5 anpresst. Diese Hubbewegung des zweiten Kolbens K2 erfolgt innerhalb der Führungs- und Dichtlänge des Führungsringes 23, so dass die ersten und zweiten Kammern 31, 32 voneinander separiert sind, wobei die zweite Kammer 32 gegebenenfalls über den anderen Außenanschluss 26 entlüftet wird. Anschließend fährt der erste Kolben K1 nach oben, wobei er über das Koppelelement 36' den zweiten Ventilteller 7' nach oben bis in eine definierte Spaltstellung von der Sitzfläche abhebt. Diese Spaltstellung ist dadurch definiert, dass das Koppelelement 36' mit dem Anschlag 42' am Glockenkörper 35 des zweiten Kolbens K2 zur Anlage kommt. Dann sind die ersten und zweiten Kolben K1, K2 über den Druckimpuls D2 relativ zueinander verspannt, entsprechend der Darstellung in Fig. 9.

In der Spaltstellung des zweiten Ventiltellers 7' kann Reinigungsmedium aus dem Strömungsweg 15 über die konische Sitzfläche, die Abdichtung 8', die Unterseite der axialen Abdichtung 6 sowie des ersten Ventiltellers 5, die Oberseite des zweiten Ventiltellers 7' und einen Teilabschnitt des Ventiltellerschaftes 49 strömen und Verunreinigungen entfernen, ehe das Reinigungsmedium mit den Verunreinigungen über den Kanal 11 abfließt.

Die Rückstellung in die in Fig. 7 gezeigte Schließstellung erfolgt dadurch, dass nach Abbau des Druckimpulses D2 die Federanordnung 21 den ersten Kolben K1 nach unten drückt, der über seinen Glockenkörper 34 und den Anschlagring 41 das Koppelelement 36' relativ zum Koppelelement 37' nach unten drückt und den zweiten Ventilteller 7' aufsetzt.

Der Ablauf des Reinigungstaktes des ersten Ventiltellers 5 wird anhand Fig. 10 erläutert. Ausgehend von der Schließstellung von Fig. 7 wird auf den Außenanschluss 28 der Druckimpuls D3 aufgebracht und über den Druckübertragungsweg 28' seitlich direkt in die dritte Kammer 33 geleitet. Der dritte Kolben K3 fährt nach oben, bis er am Anschlag 46 des Koppelelementes 37' anschlägt und das Koppelelement 37' und den ersten Ventilteller 5 bis in eine definierte Spaltstellung weg von der konischen Sitzfläche 3 hebt. Diese Spaltstellung wird durch Anschlag des dritten Kolbens K3 an dem Sicherungsring 59 definiert. Die Federanordnung 21 hält über das Koppelelement 36' den zweiten Ventilteller 7' in der Schließstellung. Nun kann Reinigungsmedium aus dem Strömungsweg 14 über den ersten Ventilteller 5, die Abdichtung 6, die konische Sitzfläche 3, die Innenwand des Sitzes 2' und die Oberflächen der ersten und zweiten Ventilteller 5, 7' sowie einen Abschnitt des Ventiltellerschaftes 49 strömen und Verunreinigungen ablösen und mit den Verunreinigungen durch den Kanal 11 abströmen. Alternativ könnte auch extern gereinigt werden unter Verwendung des Reinigungsmediumanschlusses 48 durch den Leckageraum 50 in den Strömungsweg 14.

Um jedoch eine Kontaminierung der Strömungswege bei Reinigungsvorgängen zu vermeiden, wird bei den Reinigungstakten der ersten und zweiten Ventilteller 5, 7, 7' einer internen Reinigung jeweils aus dem Strömungsweg 14 oder 15 durch den Leckageraum 50 in den Kanal 11 der Vorzug gegeben.

Die Rückstellung aus dem Reinigungstakt von Fig. 10 in die Schließstellung erfolgt dadurch, dass nach Abbau des Druckimpulses D3 die Passivfederanordnung 22 das Koppelelement 37' nach unten drückt und über den Anschlag 46 des Koppelelementes 37' den dritten Kolben K3 mitnimmt, bis der erste Ventilteller 5 aufgesetzt ist.

## Patentansprüche

1. Antriebsvorrichtung (A) für ein Doppelsitzventil (D), insbesondere zur Lebensmittel-Strömungssteuerung, das in einem Ventilgehäuse (1) zwischen Strömungswegen (14, 15) einen Sitz (2, 2') und erste und zweite, relativ zueinander und gemeinsam relativ zum Sitz linear verstellbare Ventilteller (5, 7, 7') aufweist, wobei in einem Antriebsvorrichtungsgehäuse (16) durch alternierende Druckimpulse (D1, D2, D3) mit einem Druckmedium zum Initiieren eines Öffnungstaktes beider Ventilteller, eines Reinigungstaktes des ersten Ventiltellers (5), und eines Reinigungstaktes des zweiten Ventiltellers (7, 7') abgedichtet verschiebbare erste, zweite und dritte Kolben (K1, K2, K3) vorgesehen sind, die wahlweise mit zumindest einem von zwei jeweils mit den ersten und zweiten Ventiltellern verbundenen Koppelelementen (36, 37, 36', 37') bewegungsübertragend verbindbar sind, wobei der erste Kolben (K1) im Antriebsvorrichtungsgehäuse 16 durch eine Schließfederanordnung (21) zum Verstellen der ersten und zweiten Ventilteller (5, 7, 7') in ihre jeweilige Schließstellung beaufschlagbar ist, mit dem zweiten Kolben (K2) der zweite Ventilteller (7, 7') für einen Reinigungstakt des zweiten Ventiltellers (7, 7') relativ zum Sitz verstellbar ist, mit dem dritten Kolben (K3) der erste Ventilteller (5) für einen Reinigungstakt des ersten Ventiltellers (5) relativ zum Sitz verstellbar ist, und mehrere Druckübertragungswege (29, 30, 28') zu von den Kolben begrenzten Kammern (31, 32, 33) in das Antriebsvorrichtungsgehäuse (16) führen und der zweite Kolben (K2) separiert vom ersten Kolben (K1) im Antriebsvorrichtungsgehäuse (16) abgedichtet geführt ist, und Abdichtbereiche der ersten und zweiten Kolben (K1, K2) im Antriebsvorrichtungsgehäuse (16) die erste Kammer (31) und die zweite Kammer (32) grenzen, und für den Reinigungstakt des zweiten Ventiltellers (7, 7') zumindest ein Druckübertragungsweg (29, 30) quer zur gemeinsamen Achse (X) des Antriebsvorrichtungsgehäuses (16) und des Ventilgehäuses (1, 1') in das Antriebsvorrichtungsgehäuse (16) und direkt zumindest in die erste Kammer (31) führt, **dadurch gekennzeichnet, dass** das Antriebsvorrichtungsgehäuse (16) zumindest in einen Gehäuseoberteil (17) und einen Gehäusemittelteil (18) unterteilt ist, dass im Gehäusemittelteil (18) ein Führungsring (23) mit einem kleineren Führungs- und Dichtdurchmesser für den zweiten Kolben (K2) als der Führungs- und Dichtdurchmesser des ersten Kolbens (K1) im Gehäuseoberteil (17) vorgesehen ist, dass der wenigstens eine Druckübertragungsweg (29, 30) zumindest zur ersten Kammer (31) seitlich durch den Gehäusemittelteil (18) oder durch den Führungsring (23) direkt in der ersten Kammer (31) mündet, und dass die axiale Dicht- und Führungslänge des Führungsrings (23) kürzer ist als der Verschiebehub des zweiten Kolbens (K2) beim Öffnungstakt des Doppelsitzventils (D).

2. Antriebsvorrichtung nach Anspruch 1, **dadurch gekennzeichnet, dass** der Führungsring (23) eine konische Einführschräge (60) für den zweiten Kolben (K2) aufweist.

3. Antriebsvorrichtung nach Anspruch 1, **dadurch gekennzeichnet, dass** das Antriebsvorrichtungsgehäuse (16) einen mit dem Gehäusemittelteil (18) gefügten Gehäuseunterteil (19) für den dritten Kolben (K3) und die dritte Kammer (33) aufweist, und dass der Führungs- und Dichtdurchmesser des dritten Kolbens (K3) im Gehäuseunterteil (19) gleich dem oder kleiner ist als der Führungs- und Dichtdurchmesser des zweiten Kolbens (K2) im Führungsring (23).

4. Antriebsvorrichtung nach Anspruch 1, **dadurch gekennzeichnet, dass** separate Druckübertragungswege (30, 28') seitlich durch den Führungsring (23) und den Gehäuseunterteil (19) jeweils direkt in die zweiten und dritten Kammern (32, 33) führen.

5. Antriebsvorrichtung nach wenigstens einem der vorhergehenden Ansprüche, **dadurch gekennzeichnet, dass** Druckübertragungswege (29, 30) zu den ersten und zweiten Kammern (31, 32) von einem gemeinsamen Ventil (24, 24') ausgehen, das zwei separate Außenanschlüsse (25, 26) und ein druckgesteuertes Wechselventil (27, 27') aufweist, und, vorzugsweise, seitlich außen am Antriebsvorrichtungsgehäuse (16) bzw. am Gehäusemittelteil (18) montiert ist.

6. Antriebsvorrichtung nach Anspruch 5, **dadurch gekennzeichnet, dass** das Wechselventil (27) in einer mit den Außenanschlüssen (25, 26) und über Kammerauslässe (56, 57) mit den ersten und zweiten Kammern (31, 32) getrennt kommunizierenden Steuerkammer (51) einen abgedichtet verschiebbaren Steuerkolben (54) enthält, der abhängig von der Druckbeaufschlagung des einen oder des anderen Außenanschlusses (25, 26) zwischen zwei Schaltstellungen umschaltbar ist, in der einen Schaltstellung den einen Außenanschluss (26) gleichzeitig mit den zwei Kammerauslässen (56, 57) zu den ersten und zweiten Kammern (31, 32) verbindet und, vorzugsweise, den anderen Außenanschluss (25) gegenüber den Kammerauslässen (56, 57) absperrt, und in der anderen Schaltstellung den Kammerauslass (57) zur ersten Kammer (31) mit dem anderen Außenanschluss (25) und den Kammerauslass (56) zur zweiten Kammer (32) mit dem einen Außenanschluss (26) verbindet.

7. Antriebsvorrichtung nach Anspruch5, **dadurch gekennzeichnet, dass** das Wechselventil (27') in einer mit den zwei Außenanschlüssen (25, 26) und über Kammerauslässe (56, 57) mit den ersten und zweiten Kammern (31, 32) getrennt kommunizierenden Steuerkammer (51') einen abgedichtet verschiebbaren Steuerkolben (54') enthält, der abhängig von der Druckbeaufschlagung des einen oder des anderen Außenanschlusses (25, 26) zwischen zwei Schaltstellungen umschaltbar ist, in der einen Schaltstellung den Kammer-auslass (56) zur zweiten Kammer (32) mit dem einen Außenanschluss (26) verbindet und, den Kammerauslass (57) zur ersten Kammer (31) zum anderen Außenanschluss (25) absperrt, und in der zweiten Schaltstellung den Kammerauslass (56) zur zweiten Kammer (32) mit dem einen Außenanschluss (26) und den Kammerauslass (57) zur ersten Kammer (31) mit dem anderen Außenanschluss (25) verbindet, und dass, vorzugsweise, im Abdichtbereich des zweiten Kolbens (K2) wenigstens eine in Strömungsrichtung von der ersten zur zweiten Kammer (31, 32) sperrende und in der entgegengesetzten Strömungsrichtung durchgängige Dichtung (58') vorgesehen ist, vorzugsweise eine in einer Ringnut (59) des zweiten Kolbens (K2) angeordnete Nutringdichtung.

8. Antriebsvorrichtung nach wenigstens einem der vorhergehenden Ansprüche, **dadurch gekennzeichnet, dass** die ersten und zweiten Kolben (K1, K2) an ihren dem Ventilgehäuse (1, 1') abgewandten Seiten teleskopartig ineinandergreifende Glockenkörper (34, 35) aufweisen, dass der innen im Glockenkörper (34) des ersten Kolbens (K1) angeordnete Glockenkörper (35) des zweiten Kolbens (K2) eine in Schließrichtung des ersten Ventiltellers (5) zum Sitz (2, 2') wirkende Passivfederanordnung (22) enthält, und dass sich die Passivfederanordnung (22) in Achsrichtung zumindest mit einem Teil ihrer Axialerstreckung innerhalb der Schließfederanordnung (21) erstreckt, die im Antriebsvorrichtungsgehäuse (16) den ersten Kolben (K1) in Schließrichtung beider Ventilteller (5, 7, 7') beaufschlagt.

9. Antriebsvorrichtung nach Anspruch 1, **dadurch gekennzeichnet, dass** ein Koppelelement (36, 36') eine Kolbenstange ist, deren eines Ende mit einer aus dem Antriebsvorrichtungsgehäuse (16) nach außen geführten Hubbegrenzungsverlängerung (38, 38') verbunden ist, und dass das andere Koppelelement (37, 37') eine die Kolbenstange aufnehmende Hülse ist, die Mitnehmeranschläge (46, 45) für eine Passivfederanordnung (22), den dritten Kolben (K3), und entweder die Kolbenstange oder den zweiten Kolben (K2) aufweist.

10. Antriebsvorrichtung nach Anspruch 9, **dadurch gekennzeichnet, dass** die beiden Koppelelemente (36, 37, 36', 37') und die Hubbegrenzungsverlängerung (38, 38') wechselbare Austauschkomponenten der Antriebsvorrichtung (A) sind.

## Claims

1. Drive device (A) for a double seat valve (D), in particular for food flow control, which comprises, in a valve housing (1, 1') between flow paths (14, 15), a seat (2, 2') and first and second valve disks (5, 7, 7') linearly adjustable relative to each other and together relative to the seat, wherein first, second and third pistons (K1, K2, K3) are provided in a drive device housing (16) and are movable in a sealed manner by alternating pressure pulses (D1, D2, D3) of a pressure medium for initiating an opening cycle of both valve disks, a cleaning cycle of the first valve disk (5), and a cleaning cycle of the second valve disk (7, 7'), wherein the pistons can be selectively connected with at least one of two couple elements (36, 37, 36', 37') connected to the first and the second valve disks so as to transmit movements, wherein the first piston (K1) can be actuated within the drive device housing (16) by a closing spring assembly (21) for adjusting the first and second valve disks (5, 7, 7') into the respective closing position, the second valve disk (7, 7') being adjustable relative to a seat by the second piston (D2) for a cleaning cycle of the second valve disk (7, 7'), the first valve disk (5) being adjustable relative to the seat by the third piston (K3) for a cleaning cycle of the first valve disk (5) and wherein several pressure transmission paths (29, 30, 28') lead into the drive device housing (16) to chambers (31, 32, 33) bound by the pistons, and the second piston (K2) being guided in sealed fashion separated from the first piston (K1) in the drive device housing (16), and sealing areas of the first and the second pistons (K1, K2) bounding the first chamber (31) and the second chamber (32) in the drive device housing (16), and at least one pressure transmission path (29, 30) leads transversely to the common axis (X) of the drive device housing (16) and of the valve housing (1, 1') into the drive device housing (16) and directly at least into the first chamber (31),
**characterized in that** the drive device housing (16) is divided into at least one upper housing part (17) and one central housing part (18), that a guide ring (23) with a smaller guiding and sealing diameter for the second piston (K2) than the guiding and sealing diameter of the first piston (K1) in the upper housing part (17) is provided in the central housing part (18), that the at least one pressure transmission path (29, 30) at least to the first chamber (31) extends sidewards through the central housing part (18) or through the guide ring (23) and opens directly in the first chamber (31) and
that the axial sealing and guiding length of the guide ring (23) is shorter than the shift stroke of the second piston (K2) during the opening cycle of the double seat valve (D).

2. Drive device according to claim 1, **characterized in that** the guide ring (23) comprises a conical introduction inclination (60) for the second piston (K2).

3. Drive device according to claim 1, **characterized in that** the drive device housing (16) comprises a lower housing part (19) joined with the central housing part (18) and a third chamber (33) for the third piston (K3), and that the guiding and sealing diameter of the third piston (K3) in the lower housing part (19) is equal to or smaller than the guiding and sealing diameter of the second piston (K2) in the guide ring (23).

4. Drive device according to claim 1, **characterized in that** separate pressure transmission paths (30, 28') laterally lead through the guide ring (23) and the lower housing part (19) each directly into the second and the third chambers (32, 33).

5. Drive device according to at least one of the preceding claims, **characterized in that** pressure transmission paths (29, 30) to the first and second chambers (31, 32) start from a common valve (24, 24') which comprises two separate external connections (25, 26) and a pressure-controlled shuttle valve (27, 27') and is preferably mounted laterally outside at the drive device housing (16) or at the central housing part (18), respectively.

6. Drive device according to claim 5, **characterized in that** the shuttle valve (27) contains a control piston (54) movable in a sealed manner in a control chamber (51) separately communicating with the external connections (25, 26) and via chamber outlets (56, 57) with the first and the second chambers (31, 32), which control piston (54) can be switched, in response to the pressure admission to the one or the other external connection (25, 26), between two switching positions, in the one switching position connects the one external connection (26) simultaneously with the two chamber outlets (56, 57) to the first and the second chambers (31, 32), and preferably shuts off the other external connection (25) to the chamber outlets (56, 57), and in the other switching position connects the chamber outlet (57) to the first chamber (31) with the other external connection (25) and the chamber outlet (56) to the second chamber (32) with the one external connection (26).

7. Drive device according to claim 5, **characterized in that** the shuttle valve (27') contains a control piston (54') movable in a sealed manner in a control chamber (51') separately communicating with the two external connections (25, 26) and via chamber outlets (56, 57) with the first and second chambers (31, 32), where the control piston can be switched between two switching positions in response to the pressure admission to the one or the other external connection (25, 26), in the one switching position connects the chamber outlet (56) to the second chamber (32) with the one external connection (26) and shuts off the chamber outlet (57) to the first chamber (31) to the other external connection (25), and in the second switching position connects the chamber outlet (56) to the second chamber (32) with the one external connection (26) and the chamber outlet (57) to the first chamber (31) with the other external connection (25), and that in the sealing area of the second piston (K2), at least one seal (58') is preferably provided which shuts off in the direction of flow from the first to the second chamber (31, 32) and is open in the opposite direction of flow, preferably a grooved ring seal arranged in a ring groove (59) of the second piston (K2).

8. Drive device according to at least one of the preceding claims, **characterized in that** the first and the second pistons (K1, K2) comprise, at their sides pointing away from the valve housing (1, 1'), bell bodies (34, 35) inter engaging like a telescope, that the bell body (35) of the second piston (K2) arranged inside the bell body (34) of the first piston (K1) contains a passive spring assembly (22) acting in the closing position of the first valve disk (5) to the seat (2, 2'), and that the passive spring assembly (22) extends in the axial direction at least over a portion of its axial extension within the closing spring assembly (21) which in the drive device housing (16) acts on the first piston (K1) in the closing direction of both valve disks (5, 7, 7').

9. Drive device according to claim 1, **characterized in that** one couple element (36, 36') is a piston rod, one end of which being connected with a lift stroke limiting extension (38, 38') extending to the outside of the drive device housing (16), and that the other couple element (37, 37') is a sleeve accommodating the piston rod and comprising driving stops (46, 45) for either a passive spring assembly (22), the third piston (K3), or either the piston rod or the second piston (K2).

10. Drive device according to claim 9, **characterized in that** the both couple elements (36, 37, 36', 37') and the lift stroke limiting extension (38, 38') are replaceable exchange components of the drive device (A).

## Revendications

1. Dispositif d'entrainement (A) pour une soupape à siège double (D), notamment pour commander l'écoulement de produits alimentaires, qui comprend, dans un corps de soupape (1) entre des parcours d'écoulement (14, 15), un siège (2, 2') et des premiers et deuxième disques d'obturation de soupape (5, 7, 7') pouvant être déplacés linéairement les uns par rapport aux autres et en commun par rapport au siège, dispositif
dans lequel dans un carter de dispositif d'entrainement (16) sont prévus, pour initier un cycle d'ouverture des deux disques d'obturation de soupe, un cycle de nettoyage du premier disque d'obturation de soupape (5), et un cycle de nettoyage du deuxième disque d'obturation de soupape (7, 7'), par des impulsions de pression (D1, D2, D3) alternées d'un fluide de pression, des premier, deuxième et troisième pistons (K1, K2, K3) pouvant coulisser de manière étanche, qui peuvent être reliés sélectivement pour la transmission de mouvement, à au moins l'un de deux éléments de couplage (36, 37, 36', 37') reliés respectivement aux premier et deuxième disques d'obturation de soupape,
et dans lequel le premier piston (K1) dans le carter de dispositif d'entrainement (16) peut être sollicité par un agencement de ressort de fermeture (21) pour déplacer le premier et le deuxième disque d'obturation de soupape (5, 7, 7') dans leur position fermée respective, le deuxième disque d'obturation de soupape (7, 7') peut être déplacé par rapport au siège à l'aide du deuxième piston (K2) pour un cycle de nettoyage du deuxième disque d'obturation de soupape (7, 7'), le premier disque d'obturation de soupape (5) peut être déplacé par rapport au siège à l'aide du troisième piston (K3) pour un cycle de nettoyage du premier disque d'obturation de soupape (5), et plusieurs chemins de transmission de pression (29, 30, 28') mènent dans le carter de dispositif d'entrainement (16) à des chambres (31, 32, 33) délimitées par les pistons, et le deuxième piston (K2) est guidé de manière étanche dans le carter de dispositif d'entrainement (16) séparément du premier piston (K1), et des zones d'étanchéité des premier et deuxième piston (K1, K2) dans le carter de dispositif d'entrainement (16) délimitent la première chambre (31) et la deuxième chambre (32), et pour le cycle de nettoyage du deuxième disque d'obturation de soupape (7, 7'), au moins un chemin de transmission de pression (29, 30) mène, transversalement à l'axe commun (X) du carter de dispositif d'entrainement (16) et du corps de soupape (1, 1'), dans le carter de dispositif d'entrainement (16) et directement au moins dans la première chambre (31),
**caractérisé**
**en ce que** le carter de dispositif d'entrainement (16) est subdivisé en au moins une partie supérieure de carter (17) et une partie centrale de carter (18), **en ce que** dans la partie centrale de carter (18) il est prévu un anneau de guidage (23) avec un diamètre de guidage et d'étanchéité pour le deuxième piston (K2) plus petit que le diamètre de guidage et d'étanchéité du premier piston (K1) dans la partie supérieure de carter (17), **en ce que** ledit au moins un chemin de transmission de pression (29, 30) au moins vers la première chambre (31) débouche, latéralement à travers la partie centrale de carter (18) ou à travers l'anneau de guidage (23), directement dans la première chambre (31), et **en ce que** la longueur axiale de guidage et d'étanchéité de l'anneau de guidage (23) est plus courte que la course de coulissement du deuxième piston (K2) lors du cycle d'ouverture de la soupape à siège double (D).

2. Dispositif d'entrainement selon la revendication 1, **caractérisé en ce que** l'anneau de guidage (23) présente un biseau d'entrée conique (60) pour le deuxième piston (K2).

3. Dispositif d'entrainement selon la revendication 1, **caractérisé en ce que** le carter de dispositif d'entrainement (16) comporte une partie inférieure de carter (19) pour le troisième piston (K3), qui est assemblée à la partie centrale de carter (18) et présente la troisième chambre (33), et **en ce que** le diamètre de guidage et d'étanchéité du troisième piston (K3) dans la partie inférieure de carter (19) est égal ou inférieur au diamètre de guidage et d'étanchéité du deuxième piston (K2) dans l'anneau de guidage (23).

4. Dispositif d'entrainement selon la revendication 1, **caractérisé en ce que** des chemins de transmission de pression (30, 28') séparés mènent latéralement à travers l'anneau de guidage (23) et la partie inférieure de carter (19), directement et respectivement dans les deuxième et troisième chambres (32, 33).

5. Dispositif d'entrainement selon l'une au moins des revendications précédentes, **caractérisé en ce que** des chemins de transmission de pression (29, 30) vers les première et deuxième chambres (31, 32) sont issus d'une soupape commune (24, 24'), qui présente deux raccords de branchement extérieurs (25, 26) séparés et une soupape de commutation (27, 27') commandée par la pression, et qui de préférence est montée latéralement à l'extérieur sur le carter de dispositif d'entrainement (16), à savoir sur la partie centrale de carter (18).

6. Dispositif d'entrainement selon la revendication 5, **caractérisé en ce que** la soupape de commutation (27) renferme, dans une chambre de commande (51) communiquant séparément avec les raccords de branchement extérieurs (25, 26) et avec les première et deuxième chambres (31, 32) par l'intermédiaire de sorties de chambre (56, 57), un piston de commande (54) pouvant coulisser de manière étanche, qui, en fonction de l'alimentation en pression de l'un ou de l'autre des raccords de branchement extérieurs (25, 26), peut être commuté entre deux positions de commutation, et qui, dans une position de commutation, relie un raccord de branchement extérieur (26) simultanément aux deux sorties de chambre (56, 57) vers les première et deuxième chambres (31, 32), et isole de préférence l'autre raccord de branchement extérieur (25) des sorties de chambre (56, 57), et dans l'autre position de commutation, relie la sortie de chambre (57) vers la première chambre (31) à l'autre raccord de branchement extérieur (25), et la sortie de chambre (56) vers la deuxième chambre (32) audit un raccord de branchement extérieur (26).

7. Dispositif d'entrainement selon la revendication 5, **caractérisé en ce que** la soupape de commutation (27') renferme, dans une chambre de commande (51') communiquant séparément avec les deux raccords de branchement extérieurs (25, 26) et avec les première et deuxième chambres (31, 32) par l'intermédiaire de sorties de chambre (56, 57), un piston de commande (54') pouvant coulisser de manière étanche, qui, en fonction de l'alimentation en pression de l'un ou de l'autre des raccords de branchement extérieurs (25, 26), peut être commuté entre deux positions de commutation, et qui, dans une position de commutation, relie la sortie de chambre (56) vers la deuxième chambre (32) à un raccord de branchement extérieur (26), et isole la sortie de chambre (57) vers la première chambre (31) de l'autre raccord de branchement extérieur (25), et, dans la deuxième position de commutation, relie la sortie de chambre (56) vers la deuxième chambre (32) au dit un raccord de branchement extérieur (26), et la sortie de chambre (57) vers la première chambre (31) à l'autre raccord de branchement extérieur (25), et **en ce que**, de préférence, dans la zone d'étanchéité du deuxième piston (K2), il est prévu au moins un joint d'étanchéité (58') bloquant dans la direction d'écoulement de la première à la deuxième chambre (31, 32) et passant dans la direction d'écoulement opposée, de préférence une bague d'étanchéité annulaire agencée dans une rainure annulaire (59) du deuxième piston (K2).

8. Dispositif d'entrainement selon l'une au moins des revendications précédentes, **caractérisé en ce que** les premier et deuxième pistons (K1, K2) présentent, sur leurs côtés éloignés du corps de soupape (1), des corps en cloche (34, 35) s'engageant l'un dans l'autre de manière télescopique, **en ce que** le corps en cloche (35) du deuxième piston (K2), agencé à l'intérieur du corps en cloche (34) du premier piston (K1), renferme un agencement de ressort passif (22) agissant dans la direction de la fermeture du premier disque d'obturation de soupape (5) vers le siège (2, 2'), et **en ce que** l'agencement de ressort passif (22) s'étend dans la direction de l'axe, au moins sur une partie de son étendue axiale, à l'intérieur de l'agencement de ressort de fermeture (21), qui, dans le carter de dispositif d'entraînement (16), sollicite le premier piston (K1) dans la direction de fermeture des deux disques d'obturation de soupape (5, 7, 7').

9. Dispositif d'entrainement selon la revendication 1, **caractérisé en ce qu'**un élément de couplage (36, 36') est une tige de piston, dont une extrémité est reliée à un prolongement de limitation de course (38, 38'), qui est mené vers l'extérieur hors du carter de dispositif d'entrainement (16), et **en ce que** l'autre élément de couplage (37, 37') est une douille accueillant la tige de piston et qui présente des butées d'entrainement (46, 45) pour un agencement de ressort passif (22), le troisième piston (K3), et soit la tige de piston ou le deuxième piston (K2).

10. Dispositif d'entrainement selon la revendication 9, **caractérisé en ce que** les deux éléments de couplage (36, 37, 36', 37') et le prolongement de limitation de course (38, 38') sont des composants interchangeables du dispositif d'entrainement (A), pouvant être remplacés.
